(19) Europäisches Patentamt
European Patent Office
Office européen des brevets

(11) EP 2 459 481 B1

(12) EUROPÄISCHE PATENTSCHRIFT

(45) Veröffentlichungstag und Bekanntmachung des Hinweises auf die Patenterteilung:
**18.03.2015 Patentblatt 2015/12**

(21) Anmeldenummer: **10728213.9**

(22) Anmeldetag: **28.06.2010**

(51) Int Cl.:
***C10L 3/00*** *(2006.01)* ***C01B 3/16*** *(2006.01)*

(86) Internationale Anmeldenummer:
**PCT/EP2010/059115**

(87) Internationale Veröffentlichungsnummer:
**WO 2011/012387 (03.02.2011 Gazette 2011/05)**

# (54) VERFAHREN UND ANORDNUNG ZUR UMWANDLUNG VON KOHLENMONOXID UND WASSER IN KOHLENDIOXID UND WASSERSTOFF MIT DER ABTRENNUNG VON ZUMINDEST EINEM PRODUKTGAS

METHOD AND FACILITY FOR CONVERTING CARBON MONOXIDE AND WATER INTO CARBON DIOXIDE AND HYDROGEN, WITH THE REMOVAL OF AT LEAST ONE PRODUCT GAS

PROCÉDÉ ET ENSEMBLE DE TRANSFORMATION DE MONOXYDE DE CARBONE ET D'EAU EN DIOXYDE DE CARBONE ET HYDROGÈNE AVEC LA SÉPARATION D'AU MOINS UN PRODUIT GAZEUX

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **30.07.2009 DE 102009035387**

(43) Veröffentlichungstag der Anmeldung:
**06.06.2012 Patentblatt 2012/23**

(73) Patentinhaber: **Siemens Aktiengesellschaft
80333 München (DE)**

(72) Erfinder:
- **BALDAUF, Manfred
91056 Erlangen (DE)**
- **GRAEBER, Carsten
91056 Erlangen (DE)**
- **HANEBUTH, Marc
22297 Hamburg (DE)**
- **ZIMMERMANN, Gerhard
91315 Höchstadt/Aisch (DE)**

(56) Entgegenhaltungen:
**EP-B1- 0 299 995 DE-B- 1 147 214**

- **Reutemann, W et al.: "Formic Acid" Ullmann's Encyclopedia of Industrial Chemistry 15. Juni 2000 (2000-06-15), Seiten 1-22, XP002607365 Online DOI: DOI: 10.1002/14356007.a12_013 Gefunden im Internet: URL:http://onlinelibrary.wiley.com/doi/10.1002/14356007.a12_013/pdf [gefunden am 2010-09-22]**

EP 2 459 481 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft eine Kohlenmonoxid-Shift-Reaktion zur Umwandlung von Kohlenmonoxid und Wasser in Kohlendioxid und Wasserstoff insbesondere bei industrieller Anwendung.

Diese Reaktion entsprechend der Gleichung $CO+H_2O \rightarrow CO_2+H_2$ gehört zu den wichtigsten Reaktionen in der chemischen Industrie. Mittlerweile ist diese Reaktion auch für Kraftwerke mit fossilen Brennstoffen interessant geworden. Der Hintergrund hierfür ist der aktuelle Trend der $CO_2$-armen Verbrennung bei der Befeuerung dieser Kraftwerke. Bei dem sogenannten Pre-Combustion-Ansatz muss vor der Verbrennung das Kohlenmonoxid in Kohlendioxid mittels der oben genannten Gleichung (1) gewandelt werden, um den gesamten Kohlenstoffanteil in Form von Kohlendioxid abtrennen zu können. Damit wird die Energie des Kohlenmonoxids auf in den Gasturbinen nutzbaren Wasserstoff übertragen (geshiftet). Für die Abtrennung der Produkte Kohlendioxid und auch Wasserstoff ist eine Trennung aus der Gasphase jedoch sehr energieaufwändig.

Bei den zurzeit üblichen Ansätzen erfolgen die Kohlenmonoxid-Shift-Reaktion und die Abtrennung des Kohlendioxids in grundlegend getrennten Teilschritten. Zunächst wird in der Gasphase die Kohlenmonoxid-Shift-Reaktion durchgeführt. Danach wird in einem weiteren Verfahrensschritt das Kohlendioxid abgetrennt. Als typisches Beispiel für die Abtrennung ist die Rectisol-Wäsche zu nennen, wobei das Kohlendioxid in gekühltem Methanol absorbiert wird. Hierfür sind entsprechend tiefe Temperaturen nötig, um das Kohlendioxid abzutrennen, wobei für das Abkühlen ein großer Energieaufwand nötig ist, wodurch der Gesamt-Wirkungsgrad des Kraftwerks erniedrigt wird.

In der Europäischen Patentschrift EP 0 299 995 B1 wird ein Verfahren zur Durchführung der Kohlenmonoxid-Shift-Reaktion beschrieben, wobei diese in flüssiger Phase abläuft. Gleichzeitig lässt sich die Abtrennung des gebildeten Kohlendioxids realisieren. Dies gilt insbesondere für Beispiel 6 der Patentschrift, sowie für die Figur 2. Dabei wird wasserhaltiges Methanol als Lösungsmittel verwendet. Der pH-Wert des Methanols wird durch die Zugabe eines Carbonats, beispielsweise Kaliumcarbonat, erhöht. In dieser Patentschrift gibt es jedoch zwei wesentlich Punkte, die einen Einsatz fraglich erscheinen lassen: Es ist nicht gewährleistet, dass der gasförmige Ausgangsstoff Kohlenmonoxid (CO) für eine großtechnische Anwendung hinreichend schnell in die flüssige Phase überführt werden kann, um dann zu Formiat umgesetzt zu werden. Weiterhin ist wegen der relativ hohen Löslichkeit in dem verwendeten Lösungsmittel mit einem signifikanten Wasserstoffverlust in den abgetrennten Kohlenstoffdioxidstrom zu rechnen.

Die zu lösende Aufgabe besteht darin, in verbesserter Form die Kohlenmonoxid-Shift-Reaktion durchzuführen, wobei die Produktgase Wasserstoff und Kohlendioxid entstehen und zumindest eines davon abzutrennen ist.

Die verbesserte Kohlenmonoxid-Shift-Reaktion in flüssiger Phase mit gleichzeitiger Abtrennung von mindestens einem Produktgas geschieht durch die Merkmalskombination jeweiliger Hauptansprüche.

Die Erfindung beschreibt ein Verfahren, bei dem die Kohlenmonoxid-Shift-Reaktion in flüssiger Phase durchgeführt wird. Innerhalb des Verfahrens, werden zwei verschiedene Lösungsmittel eingesetzt. Als erstes Lösungsmittel ist dies trockenes Methanol und als zweites Lösungsmittel wird Wasser verwendet. Die Absorption von Kohlenmonoxid in trockenem Methanol kann vorteilhaft ausgenutzt werden, da bei der Verwendung eines passenden Katalysators gleichzeitig die Bildung von Ameisensäuremethylester geschieht. Somit wird ein hoher Umsatz bei der Kohlenmonoxidbindung erzielt.

Dies geschieht sehr vorteilhaft in trockenem Methanol als erstem Lösungsmittel, in Kombination mit gelöstem Natriummethanolat als Katalysator. Die Kinetik der Kohlenmonoxidbindung und Kohlenmonoxidumwandlung lässt sich ähnlich zur großtechnischen Ameisensäureherstellung wirtschaftlich betreiben.

Der Ameisensäuremethylester wird hydrolytisch bzw. basisch katalytisch gespalten zu Ameisensäure und Methanol. Die gebildete Ameisensäure wird im Bereich eines einstellbaren basischen pH-Wertes zum Formiat deprotoniert, sodass im Verlauf der Reaktion der pH-Wert sinkt.

Dadurch, dass sowohl das erste Lösungsmittel, trockenes Methanol, als auch das zweite Lösungsmittel, Wasser, jeweils in einem unterschiedlichen Kreislauf geführt wird, kann die Freisetzung der Produktgase Kohlendioxid und Wasserstoff ohne große Wasserstoffverluste in das Kohlendioxid bzw. in den Kohlendioxidstrom dargestellt werden. Dies bedeutet, dass besonders durch die Trennung in die beiden unterschiedlichen Kreisläufe der Lösungsmittel die einzelnen Produktgase nicht in den Bereich oder in die Strömung des jeweils anderen Gases hineingeraten.

Es liegt eine räumliche Trennung bei der Bildung der beiden Gase Wasserstoff und Kohlendioxid vor und es wird zugleich die Abtrennung dieser Produktgase ermöglicht.

Die Erzeugung der beiden Produktgase Wasserstoff und Kohlendioxid erfolgt in wässriger und nicht in methanolischer Umgebung, wie im Stand der Technik gemäß der Europäischen Patentschrift EP 0 299 995 B1. In Methanol wären sonst hohe Verluste des Wasserstoffs in das erzeugte Kohlendioxid die Folge, da Wasserstoff deutlich besser in Methanol als in Wasser löslich ist.

Das Produktgas Wasserstoff kann vorteilhaft durch katalysierte Zersetzung von Formiat erzeugt werden, wobei zusätzlich Hydrogencarbonat entsteht.

Das Produktgas Kohlendioxid kann vorteilhaft an anderer Stelle im Verfahrensverlauf durch Temperaturerhöhung oder Druckerniedrigung aus Hydrogencarbonat entstehen. Gebildetes Carbonat reagiert mit Wasser, sodass der

pH-Wert ansteigt.

Es liegt eine räumliche Trennung bei der Bildung der beiden Gase Wasserstoff und Kohlendioxid vor und es wird zugleich die Abtrennung dieser Produktgase ermöglicht.

Die vorliegende Erfindung weist zum bisher bekannten Verfahren zur Durchführung der Kohlenmonoxid-Shift-Reaktion einen wesentlich veränderten Prozessaufbau auf. Dabei werden die Lösungsmittel Methanol und Wasser in zwei separaten Kreisläufen eingesetzt.

Die anfänglichen Verfahrensschritte nach der Erfindung sind in Anlehnung an die großtechnische Ameisensäureproduktion ausgestaltet. Ein Unterschied besteht darin, dass kein reines Kohlenmonoxid dem Verfahren zugeführt werden muss, sondern beispielsweise ein Synthesegas, welches Kohlenmonoxid in wesentlichem Anteil aufweist und welches in getrockneter Form dem Prozess zugeführt wird. Die Trocknung des Synthesegases ist notwendig, da die ersten Verfahrensschritte in Methanolumgebung ablaufen.

Der Ablauf der CO-Shift-Reaktion in flüssiger Phase hat gegenüber der gasförmig durchgeführten CO-Shift-Reaktion einen energetischen Vorteil, da kein Wasser für die Durchführung der Reaktion verdampft werden muss. Dieser Vorteil ist umso größer, wenn die CO-Shift-Reaktion unter einem Überschuss von Wasser durchgeführt wird, was oftmals der Fall ist.

Das primäre Ziel liegt in der Herstellung einer wässrigen Ameisensäurelösung. Der Unterschied zwischen der Verfahrensweise zur Ameisensäureherstellung und der Verfahrensweise entsprechend der Erfindung liegt darin, dass bei der Ameisensäureherstellung im Wesentlichen die Aufkonzentrierung der Ameisensäure ein Problem darstellt, welches zu lösen ist. Dieser Teilschritt ist für den Zweck der vorliegenden Erfindung jedoch nicht nötig. Vielmehr wird die Ameisensäure in ihrer verdünnten Form deprotoniert und das entstandene Formiat wird katalytisch zersetzt. Als Zwischenprodukt wird ein Ester gebildet, insbesondere Ameisensäuremethylester, welcher von dem Lösungsmittel Methanol abgetrennt wird, in Methanol und Ameisensäure gespalten. Im Anschluss daran wird in einem weiteren Verfahrensschritt Methanol zurückgewonnen und gleichzeitig Kohlenstoffdioxid, das durch die Zersetzung von Hydrogencarbonat entsteht in einen weiteren Stoffstrom abgetrennt. Die Erzeugung von Wasserstoff geschieht in einem weiteren Reaktionsvolumen über die Reaktion, dass Formiat mit Wasser Hydrogencarbonat und Wasserstoff ergibt. Somit wird in zwei verschiedenen Verfahrensschritten zum einen Kohlendioxid und zum anderen Wasserstoff gebildet und jeweils abgetrennt.

Im Folgenden wird anhand der begleitenden Figur ein die Erfindung nicht einschränkendes Ausführungsbeispiel beschrieben.

Die Figur zeigt anhand von drei Reaktoren 1, 3, 5 und zwei Kolonnen 2, 4 den Prozessablauf zur Kohlenmonoxid-Shift-Reaktion, wobei getrocknetes Synthesegas an der Zufuhr 6 zugeführt wird, und Produktgase Kohlendioxid und Wasserstoff an unterschiedlichen Stellen im Verfahren entstehen und abgetrennt werden sowie einen ersten Kreislauf 21 für das erste Lösungsmittel, trockenes Methanol, und einen zweiten Kreislauf 22 für das zweite Lösungsmittel, Wasser.

Die Kohlenmonoxid-Shift-Reaktion, sowie im Gesamtprozess auftauchende Teilreaktionen werden im Folgenden beschrieben.

Die Kohlenmonoxid-Shift-Reaktion lautet insgesamt:

$$CO+H_2O \rightarrow CO_2+H_2 \qquad (1)$$

Die Durchführung der Absorption von Kohlenmonoxid in flüssiger Phase, wobei Ameisensäuremethylester entsteht, lässt sich anhand der folgenden Gleichung darstellen:

$$CO+CH_3OH \rightarrow CH_3OOCH \qquad (2)$$

Da Synthesegas in getrocknetes Methanol eingeleitet wird, ist an dieser Stelle Wasser als Lösungsmittel nicht vorhanden. Das Synthesegas besteht im Wesentlichen aus Kohlenmonoxid und Wasserstoff. Durch die Trennung der Lösungsmittel in trockenes Methanol und Wasser wird erreicht, dass von Anfang an, beispielsweise Wasserstoffverluste in den Kohlendioxidstrom unterbunden werden.

Der entstandene Ameisensäuremethylester wird katalytisch zur Ameisensäure und zu Methanol gespalten, was einer Verseifung gleichkommt.

$$CH_3OOCH+H_2O \rightarrow CH_3OH+HCOOH \qquad (3)$$

Die entstandene Ameisensäure wird durch Deprotonierung zu Formiat gewandelt.

$$HCOOH+OH^- \rightarrow HCOO^-+H_2O \qquad (4)$$

Die Erzeugung von Wasserstoff geschieht durch katalytische Zersetzung von Formiat zu Wasserstoff und Hydrogencarbonat.

$$HCOO^- + H_2O \rightarrow HCO_3^- + H_2 \quad (5)$$

Die Freisetzung des Kohlendioxids an anderer Stelle wie die Freisetzung des Wasserstoffs läuft nach der folgenden Gleichung ab:

$$2HCO \rightarrow CO_2 + CO^- + H_2O \quad (6)$$

Gebildetes Carbonat reagiert mit Wasser, sodass der pH-Wert wieder auf einen ursprünglichen Wert steigt.

$$CO_3^{2-} + H_2O \rightarrow HCO_3^- + OH^- \quad (7)$$

Die Gleichungen (2) - (7) ergeben in der Summe die Gleichung (1). Das vorliegende Konzept ist lediglich in Teilen auf die Ameisensäureherstellung bezogen. In Verbindung mit dem Einsatzgebiet der Kohlenmonoxid-Shift-Reaktion bei Kraftwerken mit Kohlendioxidabtrennung steht jedoch anstelle der Synthese von Ameisensäure die möglichst vollständige und selektive Abtrennung der kohlenstoffhaltigen Komponenten aus dem Synthesegas im Vordergrund.

Die Kohlenmonoxid-Shift-Reaktion in flüssiger Phase verläuft über eine wässrige Ameisensäurelösung. Die direkte Bildung von gelöster Ameisensäure aus gasförmigem Kohlenmonoxid verläuft nach folgender Reaktionsgleichung:

$$CO(gas) + H_2O(flüssig) \rightarrow HCOOH(wässrig) \quad (8)$$

Ein Problem in Zusammenhang mit Gleichung 8 besteht darin, dass sie bei typischen Bedingungen einen sehr niedrigen Gleichgewichtsumsatz aufweist. Diese Reaktion lässt sich also nicht ohne weitere Maßnahmen wirtschaftlich betreiben. Der in der EP 0 299 995 B1 gezeigte Ansatz, um diese Gleichgewichtslimitierung zu überwinden, verfolgt die Deprotonierung der Ameisensäure durch höhere pH-Werte, sodass die Ameisensäure dem Gleichgewicht entzogen wird. Auf diese Weise lässt sich prinzipiell der gesamte Kohlenmonoxidgehalt aus der Gasphase in Form von gelöstem Formiat in die flüssige Phase überführen. Dieser Ansatz führt wegen des wässrigen Methanols als Lösungsmittel jedoch zu massiven Wasserstoffverlusten, wobei Wasserstoffanteile in den Kohlendioxidstrom abgeführt werden und ein unwirtschaftlich hoher Energieverbrauch vorliegt.

Weiterhin hat sich gezeigt, dass ein einfacher Prozessaufbau, wie er beispielsweise aus der EP 0 299 995 B1 bekannt ist, wegen einer komplizierten Kopplung der chemischen Reaktionen keine zufriedenstellenden Ergebnisse liefern kann. Wenn man das vorgeschlagene Lösungsmittel entsprechend der Patentschrift, Methanol mit geringem Wassergehalt, verwendet, so löst sich ein deutlicher Anteil des Wasserstoffs im Lösungsmittel. Dieses ungewollte Entweichen des Wasserstoffs in den Kohlendioxidstrom kann nur durch die Verwendung eines weiteren Lösungsmittels, das in einem zweiten Kreislauf geführt wird verhindert werden.

Eine andere Verfahrensweise, bei der anstelle von Methanol lediglich das Lösungsmittel Wasser verwendet wird, hat nicht zu einem wirtschaftlichen System geführt. Der Wasserstoffverlust kann zwar bei dieser Verfahrensweise auf wenige Promille des gesamten Wasserstoffgehaltes gesenkt werden. Der notwendige Wasserbedarf, auch wenn dieser im Kreislauf geführt wird, wäre enorm groß. Als Maß hierfür ist die Menge von abzutrennendem Kohlendioxid zu betrachten, die in Kombination mit der Gaslöslichkeit in Wasser den Wasserverbrauch festlegt. Dieser große Wasserstrom hätte einen außerordentlich hohen Energiebedarf zur Folge, da das Kohlendioxid durch eine Temperaturerhöhung abgetrennt wird.

Eine alternative Abtrennung über eine Druckerniedrigung hätte sehr hohe Betriebsdrücke und ebenfalls einen hohen Energieaufwand zur Folge.

Für die Umgehung der Gleichgewichtslimitierung der Gleichung (8) ist ein besonderer Ansatz möglich. Dieser Ansatz verfolgt nicht die direkte Herstellung einer Formiatlösung. Vielmehr wird aus methanolischer Umgebung, entsprechend Gleichung (2), Ameisensäuremethylester gebildet. Ameisensäuremethylester wird im weiteren Verlauf hydrolisiert und in eine Formiatlösung, entsprechend Gleichung (3), übergeführt. Die für dieses sequenzielle Vorgehen zusätzlichen Verfahrensschritte erhöhen den Gesamtenergieaufwand nur unwesentlich. Somit kann insgesamt mit diesem Verfahren eine wirtschaftliche Kohlendioxidabtrennung bei gleichzeitiger Durchführung der CO-Shift-Reaktion realisiert werden. Wird zusätzlich ein wasserfreies Methanol als erstes Lösungsmittel eingesetzt, so wird ein hoher Umsatz bei der Kohlenmonoxidbindung erzielt, da das Kohlenmonoxid mit Methanol zum Ameisensäuremethylester reagiert.

Entsprechend der Figur wird eine Mehrzahl von Reaktoren und Kolonnen zur Durchführung des Kohlenmonoxid-Shift-Verfahrens eingesetzt.

Ein erster Reaktor 1 wird zur Kohlenmonoxidabsorption mit gleichzeitiger Ameisensäuremethylester-Bildung,

entsprechend Gleichung (2), eingesetzt. In der darauf folgenden ersten Kolonne 2 wird der Ameisensäuremethylester abgetrennt. In dem darauf folgenden zweiten Reaktor 3 wird der Ameisensäuremethylester, entsprechend Gleichung (3), in Methanol und Ameisensäure gespalten. In der darauf folgenden zweiten Kolonne 4 wird die Kohlendioxidtrennung, entsprechend Gleichung (6) ausgeführt, wobei Carbonat und Hydrogencarbonat nach den Gleichungen (6) und (7) reagieren können. In dem dritten Reaktor 5 wird die Wasserstofftrennung aus dem Formiat katalytisch betrieben, wobei Hydrogencarbonat anfällt.

Die Figur lässt sich zum Einen grob unterteilen in einen methanolischen Bereich und einen wässrigen Bereich. Bezogen auf eine in der Figur senkrecht verlaufende, unterbrochene Trennlinie 24 zwischen der ersten Kolonne 2 und dem zweiten Reaktor 3, befinden sich der methanolische Bereich links davon und der wässrige Bereich rechts davon.

Im methanolischen Bereich wird vorzugsweise getrocknetes Synthesegas an der Zufuhr 6 dem ersten Reaktor 1 zugeführt. Das Synthesegas wird vor dem eigentlichen Verfahren getrocknet, sodass Wasseranteile nicht vorhanden sind. Abgesehen von der besseren Trennung zwischen Kohlendioxid und Wasserstoff, ist die Trocknung des Synthesegases notwendig, um die Hydrolyse eines eingesetzten Katalysators, welcher ein Methanolat ist, zu verhindern. Über die Leitungen 7 und 14 werden Methanol und entsprechender Katalysator nachgefüllt. Die Leitung 19 dient der Methanolrückführung in den ersten Reaktor 1 von der zweiten Kolonne 4. Über die Leitung 13 wird Ameisensäuremethylester und Methanolat, welche in Methanol gelöst sind, vom ersten Reaktor 1 zur ersten Kolonne 2 geführt. Der erste Kreislauf 21 für das Lösungsmittel Methanol verläuft prinzipiell über die Leitungen 14 und 13, wobei der Kreislauf auch über die erste Kolonne 2, dessen Sumpf in Leitung 14 geführt wird, geschlossen wird. Strom 12 ist nötig, um unerwünschte Feststoffe, die durch einen Abbau des Katalysators anfallen können, auszuschleusen. Durch diesen ersten Kreislauf 21 für trockenes Methanol ist sichergestellt, dass der wässrige Einschluss im Wesentlichen unterbunden ist. Dadurch wird eine optimale Kohlenmonoxidabsorption gewährleistet.

Im methanolischen Bereich befindet sich weiterhin die erste Kolonne 2. Hier wird eine Stofftrennung vorgenommen, wobei Ameisensäuremethylester abgetrennt wird und in den zweiten Reaktor 3 überführt wird. Weiterhin gilt für diese erste Kolonne 2, dass lediglich Ameisensäuremethylester, sowie für die zweite Kolonne 4, zusätzlich Methanol und Kohlendioxid abdestilliert wird, während die höher siedenden Lösungsmittel der beiden genannten Kreisläufe über die entsprechenden Sümpfe entfernt werden. Als Vorteil ergibt sich ein insgesamt geringerer Energieverbrauch.

Im wässrigen Bereich, entsprechend dem rechten Teil der Figur, wird zunächst im zweiten Reaktor 3 die Spaltung des Ameisensäuremethylesters, entsprechend Gleichung (3), vorgenommen. Die Produkte Methanol und Ameisensäure gelangen über Leitung 15 in die zweite Kolonne 4. Aus der zweiten Kolonne 4 wird wässrige Ameisensäure, die an dieser Stelle bereits deprotoniert als Formiat vorliegen kann, über Leitung 16 dem dritten Reaktor 5 zugeführt, Methanol über Leitung 19 dem ersten Reaktor 1 und nicht umgesetzter Ameisensäuremethylester über Leitung 18 dem zweiten Reaktor 3 zugeführt. Aus dem dritten Reaktor 5 wird zum Einen Wasserstoff gebildet und ausgetrieben und zum Anderen Hydrogencarbonat in wässriger Lösung rückgeführt zum zweiten Reaktor 3. Der zweite Kreislauf 22 wird im Wesentlichen dargestellt durch die Leitung 17, den zweiten Reaktor 3, die Leitung 15, die Leitung 16 und den dritten Reaktor 5, wobei sich wiederum die Leitung 17 anschließt. Dieser Wasserkreislauf hat den Vorzug, dass Wasserstoff nur unwesentlich gelöst wird und an Stelle seiner Erzeugung entfernt wird.

Die Leitung 8 dient der Wasserzufuhr und reicht entsprechend bis in den wässrigen Bereich hinein. Leitung 9 dient zur Abführung von reaktionsinerten Gasen, also den Gasen, die nicht im ersten Reaktor 1 reagiert haben, wobei Wasserstoff enthalten sein kann.

In der ersten Kolonne 2 wird der gebildete Ameisensäuremethylester abdestilliert. Der Energieaufwand ist hierbei vertretbar, da der gebildete Ameisensäuremethylester relativ leicht siedet. Bei Normaldruck liegt der Siedepunkt lediglich bei 32 °C. Das bei der Destillation zurückbleibende Methanol wird kontinuierlich in den vorherigen ersten Reaktor 1 im Wesentlichen über Leitung 14 zurückgeführt. Dabei werden mögliche Abbauprodukte eines Katalysators auskristallisiert und dem Prozess entzogen. Beispielsweise kann der Katalysator, ein Methanolat, mit eventuellen Spuren von Wasser reagieren und Methanol und ein Hydroxid bilden. Hydroxide sind typischerweise nur sehr schwer in Methanol löslich, sodass sie an dieser Stelle ausfallen und problemlos aus dem Methanol entfernt werden können. Wegen dieser möglichen Abbaureaktion sollte dafür Sorge getragen werden, dass das kohlenmonoxidhaltige Ausgangsgas wasserfrei ist. Es ist mit an Sicherheit grenzender Wahrscheinlichkeit nicht möglich, das Methanolat als katalytisch aktive Spezies durch eine weniger hydrolyseempfindlichene Spezies zu ersetzen. Es ist ein sehr starkes Nucleophil nötig um mit Kohlenmonoxid zu reagieren, was eine hydrolyseempfindliche Substanz automatisch bedingt. Außerdem sind andere Alkoxide bzw. andere starke organische Basen ungünstig, da sie bei einer Umesterung anstelle des Ameisensäuremethylesters Ester mit höheren Siedepunkten oder bei automatisch ablaufenden Säure-Base-Reaktionen Alkohole bzw. organische Säuren mit höherem Siedepunkt als Methanol bilden würden. Die Konsequenz wäre ein Erhöhter Energiebedarf in den Kolonnen. Methanolate sind die einzigen Substanzen, die bei der Umesterung genau denselben Ester bilden, sodass sich diese unvermeidbare Reaktion nicht störend durch die Bildung von höher siedenden Estern auswirken kann.

Während in den beiden ersten Bauteilen, dem ersten Reaktor 1 und der ersten Kolonne 2, das erste Lösungsmittel trockenes Methanol ist, liegt im darauf folgenden zweiten Reaktion 3 bereits eine wässrige Lösung vor. Hier wird

im, typischerweise 5-fachen Wasserüberschuss der Ester gespalten, wobei diese Reaktion typischerweise Säure- oder Basen-katalysiert abläuft. Sinnvoll ist eine basisch-katalysierte Variante, da die bei der Hydrolyse entstehende Ameisensäure sogleich zum Formiat deprotoniert wird.

Es folgt die zweite Kolonne 4, in der unhydrolisierter Ester und bei der Hydrolyse entstandenes Methanol in die jeweiligen Reaktoren zurückgeführt werden. Weiterhin bietet sich diese zweite Kolonne 4 für das Austreiben von gelöstem Kohlendioxid an, wobei durch eine temperaturabhängige Gleichgewichtslage der Reaktion zwischen Carbonat, Hydrogencarbonat und Kohlensäure auch ein Teil des Hydrogencarbonats und, sogar in geringem Anteil, auch Carbonat in gasförmiges Kohlendioxid überführt wird. Es verbleibt bei der destillativen Abtrennung der genannten Substanzen eine wässrige Formiatlösung. Diese wird in den dritten Reaktor 5 geleitet, in dem durch eine katalysierte Reaktion das Formiat zersetzt wird und Wasserstoff entsteht.

## Patentansprüche

1. Verfahren zur Durchführung einer Kohlenmonoxid-Shift-Reaktion, **dadurch gekennzeichnet, dass**

   - ein trockenes, im Wesentlichen Kohlenmonoxid CO und Wasserstoff $H_2$ aufweisendes Synthesegas in einem ersten Reaktor (1) in trockenem Methanol gelöst und Ameisensäuremethylester gebildet wird, welcher einer ersten Kolonne (2) zugeführt wird,
   - in der ersten Kolonne (2) eine Abtrennung des Ameisensäuremethylesters geschieht,
   - in einem zweiten Reaktor (3) eine Spaltung des Ameisensäuremethylesters in wässriger Lösung entweder in Methanol und Ameisensäure oder in Methanol und Formiat geschieht, wobei entweder das Methanol und die Ameisensäure oder das Methanol und das Formiat einer zweiten Kolonne (4) zugeführt werden,
   wobei der zweiten Kolonne (4) außerdem nicht umgesetzer Ameisensäuremethylester zugeführt wird,
   - in der zweiten Kolonne (4) eine Trennung von Kohlendioxid, nicht umgesetztem Ameisensäuremethylester und Methanol geschieht, wobei Ameisensäuremethylester zum zweiten Reaktor (3) geführt wird, Methanol zum ersten Reaktor (1) geführt wird und das Produktgas Kohlendioxid $CO_2$ abgetrennt wird und wässrige Ameisensäure oder wässriges Formiat einem dritten Reaktor (5) zugeführt wird,
   - in dem dritten Reaktor (5) eine katalytische Zersetzung von Ameisensäure oder Formiat in Hydrogencarbonat geschieht, wobei als Produktgas Wasserstoff abgetrennt wird, wobei Hydrogencarbonat in wässriger Lösung aus dem dritten Reaktor (5) zum zweiten Reaktor (3) rückgeführt wird,
   wobei Hydrogencarbonat außerdem von dem zweiten Reaktor (3) zu der zweiten Kolonne (4) geführt wird,

   wobei das trockene Methanol in einem ersten Kreislauf (21) geführt wird,
   wobei Wasser in einem zweiten Kreislauf (22) geführt wird,
   wobei die Reaktion zur Bildung des Ameisensäuremethylesters mit einem Katalysator aus Methanolat, insbesondere Natriummethanolat, unterstützt wird.

2. Verfahren nach Anspruch 1,
   **dadurch gekennzeichnet, dass** die Reaktion zur Erzeugung von Wasserstoff aus dem Formiat und Wasser in dem dritten Reaktor (5) durch einen heterogenen Katalysator, insbesondere einen Übergangsmetall-Katalysator, unterstützt wird.

3. Anordnung zur Durchführung einer Kohlenmonoxid-Shift-Reaktion,
   **dadurch gekennzeichnet, dass**

   - ein erster Reaktor (1) vorhanden ist zur Bindung von Kohlenmonoxid CO und Wasserstoff $H_2$ aufweisendem Synthesegas in trockenem Methanol und zur Bildung von Ameisensäuremethylester,
   - eine erste Kolonne (2) vorhanden ist zur Abtrennung des Ameisensäuremethylesters,
   - ein zweiter Reaktor (3) vorhanden ist zur Spaltung des Ameisensäuremethylesters in wässriger Lösung entweder in Methanol und Ameisensäure bzw. in Methanol und Formiat,
   - eine zweite Kolonne (4) vorhanden ist zur Aufnahme des Methanols und der Ameisensäure bzw. des Methanols und des Formiats, sowie zur Aufnahme von nicht umgesetzem Ameisensäuremethylester und Hydrogencarbonat aus dem zweiten Reaktor (3), zur Trennung von Kohlendioxid, Ameisensäuremethylester und Methanol, wobei nicht umgesetzter Ameisensäuremethylester zum zweiten Reaktor (3) rückführbar ist, Methanol zum ersten Reaktor (1) rückführbar ist und die Trennung des Produktgases Kohlendioxid $CO_2$ ausführbar ist,
   - ein dritter Reaktor (5) vorhanden ist zur Zersetzung von Ameisensäure oder Formiat in Hydrogencarbonat und zur Trennung des Produktgases Wasserstoff, wobei Hydrogencarbonat in wässriger Lösung aus dem dritten

Reaktor (5) zum zweiten Reaktor (3) rückgeführt werden kann.

## Claims

1. Process for carrying out a carbon monoxide shift reaction, **characterized in that**

   - a dry synthesis gas comprising essentially carbon monoxide CO and hydrogen $H_2$ is dissolved in dry methanol in a first reactor (1) to form methyl formate which is fed to a first column (2),
   - the methyl formate is separated off in the first column (2),
   - cleavage of the methyl formate either into methanol and formic acid or into methanol and formate occurs in aqueous solution in a second reactor (3), with either the methanol and the formic acid or the methanol and the formate being fed to a second column (4) and unreacted methyl formate also being fed to the second column (4),
   - separation of carbon dioxide, unreacted methyl formate and methanol occurs in the second column (4), with methyl formate being fed to the second reactor (3), methanol being fed to the first reactor (1) and the product gas carbon dioxide $CO_2$ being separated off and aqueous formic acid or aqueous formate being fed to a third reactor (5),
   - catalytic decomposition of formic acid or formate into hydrogencarbonate occurs in the third reactor (5), with hydrogen being separated off as product gas and hydrogencarbonate in aqueous solution being recirculated from the third reactor (5) to the second reactor (3) and hydrogencarbonate also being conveyed from the second reactor (3) to the second column (4), where the dry methanol is conveyed in a first circuit (21), water is conveyed in a second circuit (22) and the reaction to form the methyl formate is aided by a catalyst composed of methoxide, in particular sodium methoxide.

2. Process according to Claim 1, **characterized in that** the reaction to produce hydrogen from the formate and water in the third reactor (5) is aided by a heterogeneous catalyst, in particular a transition metal catalyst.

3. Apparatus for carrying out a carbon monoxide shift reaction, **characterized in that**

   - a first reactor (1) is present to bind synthesis gas comprising carbon monoxide CO and hydrogen $H_2$ in dry methanol to form methyl formate,
   - a first column (2) is present to separate off the methyl formate,
   - a second reactor (3) is present to cleave the methyl formate either into methanol and formic acid or into methanol and formate in aqueous solution,
   - a second column (4) is present to absorb the methanol and the formic acid or the methanol and the formate, and also to absorb unreacted methyl formate and hydrogencarbonate from the second reactor (3), to separate carbon dioxide, methyl formate and methanol, with unreacted methyl formate being able to be recirculated to the second reactor (3), methanol being able to be recirculated to the first reactor (1) and the removal of the product gas carbon dioxide $CO_2$ being able to be carried out,
   - a third reactor (5) is present to decompose formic acid or formate into hydrogencarbonate and to separate off the product gas hydrogen, with hydrogencarbonate in aqueous solution being able to be recirculated from the third reactor (5) to the second reactor (3).

## Revendications

1. Procédé pour la réalisation d'une réaction de déplacement de monoxyde de carbone, **caractérisé en ce que**

   - du gaz de synthèse présentant pour l'essentiel du monoxyde de carbone CO et de l'hydrogène $H_2$ est dissous dans du méthanol sec dans un premier réacteur (1) et un ester méthylique d'acide formique est formé, lequel est amené à une première colonne (2),
   - dans la première colonne (2) il se produit une séparation de l'ester méthylique d'acide formique,
   - dans un deuxième réacteur (3) il se produit une division de l'ester méthylique d'acide formique dans une solution aqueuse soit en méthanol et en acide formique soit en méthanol et en formate, soit le méthanol et l'acide formique soit le méthanol et le formate étant amenés à une deuxième colonne (4),

de l'ester méthylique d'acide formique non converti étant en outre amené à la deuxième colonne (4),
- dans la deuxième colonne (4) il se produit une séparation du dioxyde de carbone, de l'ester méthylique d'acide formique non converti et du méthanol, l'ester méthylique d'acide formique étant amené au deuxième réacteur (3), le méthanol étant amené au premier réacteur (1) et le produit gazeux qu'est le dioxyde de carbone $CO_2$ étant séparé et l'acide formique aqueux ou le formate aqueux étant amené à un troisième réacteur (5),
- dans le troisième réacteur (5) il se produit une décomposition catalytique de l'acide formique ou du formate en hydrogénocarbonate, l'hydrogène en tant que produit gazeux étant séparé, l'hydrogénocarbonate en solution aqueuse étant ramené du troisième réacteur (5) au deuxième réacteur (3),
l'hydrogénocarbonate étant en outre amené du deuxième réacteur (3) à la deuxième colonne (4),

le méthanol sec étant circulé dans un premier circuit (21),
de l'eau étant circulée dans un deuxième circuit (22),
la réaction étant supportée pour la formation de l'ester méthylique d'acide formique avec un catalyseur à base de méthanolate, en particulier du méthanolate de sodium.

**2.** Procédé selon la revendication 1,
**caractérisé en ce que** la réaction pour la génération d'hydrogène à partir du formate et de l'eau dans le troisième réacteur (5) est supportée par le biais d'un catalyseur hétérogène, en particulier un catalyseur à métaux de transition.

**3.** Agencement pour la réalisation d'une réaction de déplacement de monoxyde de carbone,
**caractérisé en ce qu'**

- un premier réacteur (1) est présent pour la liaison d'un gaz de synthèse présentant du monoxyde de carbone CO et de l'hydrogène $H_2$ dans du méthanol sec et pour la formation d'un ester méthylique d'acide formique,
- une première colonne (2) est présente pour la séparation de l'ester méthylique d'acide formique,
- un deuxième réacteur (3) est présent pour la division de l'ester méthylique d'acide formique en solution aqueuse soit en méthanol et en acide formique soit en méthanol et en formate,
- une deuxième colonne (4) est présente pour le recueil du méthanol et de l'acide formique ou du méthanol et du formate, ainsi que pour le recueil de l'ester méthylique d'acide formique non converti et de l'hydrogénocarbonate en provenance du deuxième réacteur (3), pour la séparation du dioxyde de carbone, de l'ester méthylique d'acide formique et du méthanol, l'ester méthylique d'acide formique non converti pouvant être ramené dans le deuxième réacteur (3), le méthanol pouvant être ramené dans le premier réacteur (1) et la séparation du produit gazeux qu'est le dioxyde de carbone $CO_2$ pouvant être réalisée,
- un troisième réacteur (5) est présent pour la décomposition de l'acide formique ou du formate en hydrogénocarbonate et pour la séparation du produit gazeux qu'est l'hydrogène, l'hydrogénocarbonate en solution aqueuse pouvant être ramené du troisième réacteur (5) au deuxième réacteur (3).

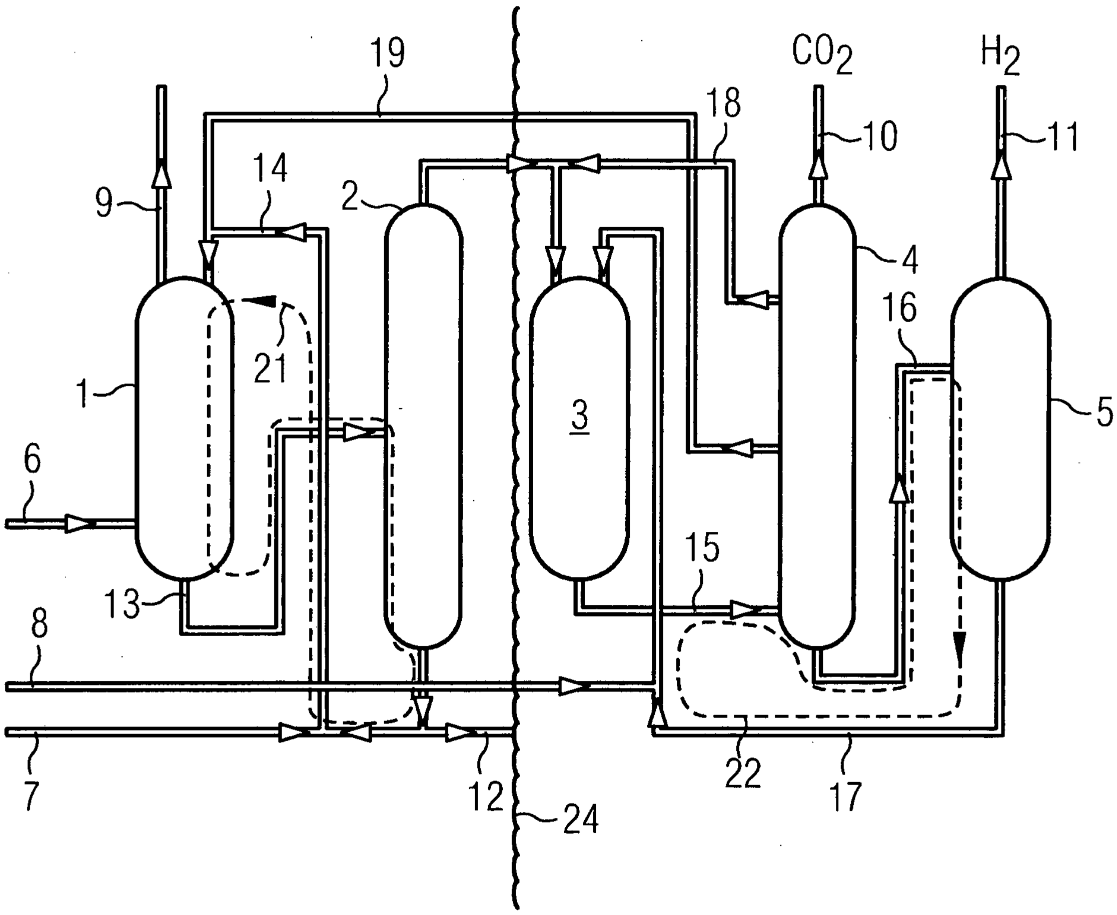

19
18
$CO_2$
$H_2$
10
11
9
14
2
4
16
1
21
3
5
6
15
13
8
7
12
24
22
17

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0299995 B1